# EUROPÄISCHE PATENTSCHRIFT

(11) **EP 4 283 160 B1**
(45) Veröffentlichungstag und Bekanntmachung des Hinweises auf die Patenterteilung: **24.12.2025**
(21) Anmeldenummer: 23164219.0
(22) Anmeldetag: 27.03.2023
(51) Int. Cl.: F16G 11/02, F16G 3/02

(54) **GURT ODER GURTSEGMENT**
BELT OR BELT SEGMENT
COURROIE OU SEGMENT DE COURROIE

(30) Priorität: 23.05.2022 DE 102022205113
(43) Veröffentlichungstag der Anmeldung: 29.11.2023
(73) Patentinhaber: ContiTech Deutschland GmbH, 30175 Hannover (DE)
(72) Erfinder: Möschen-Siekmann, Michael, 30165 Hannover (DE); Ständer, Tobias, 30165 Hannover (DE); Terpe, Julian, 30165 Hannover (DE); Hüls, Achim, 30165 Hannover (DE)
(74) Vertreter: Preusser, Andrea

(56) Entgegenhaltungen:
- EP-A1- 3 115 640
- DE-B- 1 079 397

## Beschreibung

Die vorliegende Erfindung betrifft einen Gurt oder ein Gurtsegment.

Auf verschiedenen technischen Gebieten sind seit langem endlos geschlossene Riemen bzw. Gurte bekannt. Derartige Riemen bzw. Gurte können als Antriebsriemen, als Fördergurte und dergleichen eingesetzt werden. Hierzu können derartige Riemen bzw. Gurte bereits endlos geschlossen hergestellt werden, was jedoch nicht für jeden Anwendungsfall möglich ist. Dann werden die Riemen bzw. Gurte offen hergestellt und zum Beispiel am Ort der Anwendung endlos geschlossen, indem die beiden offenen Enden miteinander verbunden werden. Auch können entsprechend lange Riemen bzw. Gurte aus Riemensegmenten bzw. aus Gurtsegmenten bestehen, welche zum Beispiel am Ort der Anwendung miteinander verbunden und abschließend endlos geschlossen werden. Derartige Anwendungen von Fördergurten können insbesondere die Fördergurtanlagen zum Transport von losen Schüttgütern und dergleichen zum Beispiel im Bergbau sein.

Derartige Riemen bzw. Gurte weisen üblicherweise einen elastisch verformbaren Grundkörper auf, welcher im Wesentlichen zum Beispiel aus einem elastomeren Material wie zum Beispiel aus einem vulkanisierten Kautschuk, auch Gummi genannt, bestehen kann. In der Längsrichtung als Laufrichtung des Riemens bzw. des Gurtes, in welcher der Riemen bzw. Gurt bei der Anwendung endlos geschlossen ist, ist üblicherweise wenigstens ein Zugträger in das Material des Grundkörpers eingebettet. Als derartiger Zugträger kann beispielsweise ein flächiges textiles Material wie zum Beispiel ein Gewebe bei sogenannten Textilgurten verwendet werden. Alternativ sind Stahlseilfördergurte bekannt, bei denen eine Mehrzahl von parallel zueinander verlaufenden Stahlseilen als Zugträger in den Grundkörper eingebettet ist. Derartige Zugträger dienen der Kraftübertragung von Zugkräften in der Längsrichtung des Riemens bzw. des Gurtes, welche der Laufrichtung des Riemens bzw. des Gurtes entspricht. In jedem Fall kann auch der Zugträger endlos geschlossen sein.

Um derartige Riemen bzw. Gurte endlos zu schließen ist seit Längerem bekannt, an beiden Enden des Riemens bzw. des Gurtes den bzw. die Zugträger von dem Material des Grundkörpers freizulegen, die freigelegten offenen Enden des bzw. der Zugträger zum Beispiel bei Stahlseilen durch Spleißen miteinander zu verbinden und den freiliegenden Abschnitt der Stahlseile wieder mit dem Material des Grundkörpers zu füllen. Wird hierbei Gummi als Material des Grundkörpers des Riemens bzw. des Gurtes verwendet, so ist dieser Abschnitt erneut zu vulkanisieren.

Da diese Art des Verbindens der offenen Enden des Riemens bzw. des Gurtes sowie entsprechender Riemensegmente bzw. Gurtsegmente insbesondere dann einen erheblichen Aufwand darstellen kann, wenn bei einem Stahlseilfördergurt die Stahlseile freizulegen, zu verspleißen und anschließend zu vulkanisieren sind, ist es aus der WO 2012 038 155 A1 bekannt, an jedem der beiden offenen Enden des Riemens bzw. des Gurtes die freigelegten Stahlseile in entsprechende Längsbohrungen einer Scharnierplatte zu stecken und dort positionssicher durch Verpressen der Scharnierplatte zu fixieren. Die beiden Scharnierplatten bilden an ihrem freien Ende jeweils ein Teilscharnier mit zinnenartigen Vorsprüngen aus, welches mit dem jeweils anderen Teilscharnier mittels eines Kopplungsstabs drehbar verbunden werden kann.

Auf diese Art und Weise können derartige Riemen bzw. Gurte oder entsprechende Riemensegmente bzw. Gurtsegmente mit Scharnierplatte an den offenen Enden werksseitig hergestellt und am Ort der entsprechenden Anwendung einfach und schnell mechanisch verbunden werden. Insbesondere kann auf ein Vulkanisieren vor Ort verzichtet werden.

Nachteilig hierbei ist jedoch, dass sich die Teilscharniere beim Verpressen verziehen können. Dies kann zu einem erhöhten Verschleiß der scharnierartigen Kopplung des Kopplungsstabs führen, da sich die zinnenartigen Vorsprünge aneinander abreiben können. Hierdurch können die zinnenartigen Vorsprünge sowie deren Durchgangsöffnungen für den Kopplungsstab soweit geschwächt werden, dass die scharnierartige Verbindung reißen kann.

Nachteilig ist ferner, dass die beiden drehbar verbundenen scharnierartigen Verbindungselemente und insbesondere deren zinnenartigen Vorsprünge und der Kopplungsstab bzw. deren senkrecht nach oben und bzw. oder nach unten zeigenden äußeren Bereiche dem wesentlichen Verschleiß beim bestimmungsgemäßen Gebrauch unterliegen. Ein Austausch der scharnierartigen Verbindungselemente stellt jedoch bei der WO 2012 038 155 A1 aufgrund der direkten Verpressung der Stahlseilenden im scharnierartigen Verbindungselement einen erheblichen Aufwand dar, da das gesamte Verbindungselement zu entfernen und auszutauschen ist.

Hierauf aufbauend beschreibt die EP 3 115 640 A1 einen Gurt oder ein Gurtsegment mit einer Mehrzahl von in Längsrichtung verlaufenden und parallel zueinander angeordneten Festigkeitsträgern und mit einem Verbindungselement, welches ein Ende des Gurtes bzw. des Gurtsegments bildet und zur Verbindung mit einem weiteren Verbindungselement des anderen Endes des Gurts bzw. mit einem Ende eines weiteren Gurtsegments ausgebildet ist, wobei die Enden der Festigkeitsträger von dem Verbindungselement gehalten werden. Die Enden der Festigkeitsträger sind mit wenigstens einem Klemmkörper kraftschlüssig verbunden, wobei der Klemmkörper von dem Verbindungselement wenigstens in Längsrichtung formschlüssig gehalten werden kann. Die Enden der Festigkeitsträger können jeweils einzeln mit einem einzelnen Klemmkörper oder zu mehreren mit einem gemeinsamen Klemmkörper verpresst sein.

Auf diese Art und Weise kann jedes offene Stahlseilende unabhängig von dem jeweiligen scharnierartigen Verbindungselement einzelnen oder gemeinsam mit einem Klemmkörper wie insbesondere mit einer metallischen Hülse verpresst werden, so dass sich das Verpressen nicht mehr auf das jeweilige scharnierartige Verbindungselement auswirken kann. Anschließend können alle Klemmkörper bzw. der Klemmkörper in einen Aufnahmeraum des jeweiligen Verbindungselements eingelegt und dort von Halteelementen in der Längsrichtung formschlüssig gehalten werden.

Dies kann das Verpressen vereinfachen, da jeweils genau ein Stahlseilende mit genau einem Klemmkörper bzw. mehrere Stahlseilenden mit genau einem gemeinsamen Klemmkörper verpresst wird bzw. werden. Die verpresste Verbindung zwischen Klemmkörper und Stahlseilende kann somit mit geringeren Kräften pro Stahlseilende aber mit vergleichbarer Wirkung wie bei der WO 2012 038 155 A1 erreicht werden, was den Aufwand reduzieren bzw. die Verwendung eines Verpresswerkzeugs mit geringeren Kräften ermöglichen kann. Es können auch dieselben Haltekräfte zwischen Klemmkörper und Stahlseilende wie bei der WO 2012 038 155 A1 bei kürzerer Länge der verpressten Verbindung ermöglicht werden, was die Baulänge der scharnierartigen Verbindung gegenüber der WO 2012 038 155 A1 reduzieren und den Einsatz derartiger scharnierartiger Verbindungen auch bei kleineren Umlenkradien ermöglichen kann. Alternativ können die Haltekräfte pro verpresster Verbindung zwischen Klemmkörper und Stahlseilende erhöht werden, was die Haltbarkeit bzw. die Belastbarkeit der verpressten Verbindung und damit die übertragbaren Zugkräfte pro verpresster Verbindung von Klemmkörper und Stahlseilende erhöhen kann.

In jedem Fall kann es bei Herstellung derartiger Riemen bzw. Gurte gewünscht, dass die Zugträger wie insbesondere die Stahlseile in der Längsrichtung als Bewegungsrichtung bzw. als Richtung der Zugkraftübertragung parallel zueinander verlaufen und in der Querrichtung einen vorbestimmten, üblicherweise gleichen, Abstand zueinander haben. Der Abstand zwischen Zugträgern in der Querrichtung wird auch als Teilung bezeichnet. Dies gilt vergleichbar für die Einbettung der Zugträger in der Höhe bzw. in der Dicke des Riemens bzw. Gurtes. Ist dies der Fall, so können die Zugkräfte möglichst gleichmäßig von allen Zugträgern übertragen werden, was ungleichmäßige und damit ggfs. unzulässig hohe Belastungen für einzelne Zugträger vermeiden kann, welche zu Beschädigungen und sogar zum Reißen des betroffenen Zugträgers führen könnten. Insbesondere die tatsächlich Anordnung der Zugträger entlang der neutralen Phase, auch in der Höhe bzw. in der Dicke, kann die Lebensdauer der Zugträger und damit die Lebensdauer des Riemens bzw. des Gurtes erhöhen.

In der Realität der Herstellung derartiger Riemen bzw. Gurte ist dies jedoch üblicherweise nicht der Fall. Aufgrund von Kräften, die während der Herstellung des elastisch verformbaren Grundkörpers des Riemens bzw. Gurtes auf dessen unfertiges Material, insbesondere unvulkanisiertes elastomeres Material, wirken können, beispielsweise bei der Vulkanisation, kommt es üblicherweise zu Verschiebungen der Zugträger in der Querrichtung, so dass die Lage der Zugträger innerhalb des fertigen Grundkörpers, insbesondere des vulkanisierten Grundkörpers, nicht der gewünschten Anordnung entspricht. Vielmehr sind die Zugträger in der Querrichtung ungleichmäßig zueinander beabstandet, d.h. die Zugträger weisen eine unterschiedliche bzw. ungleichmäßige Teilung auf, welche auch als Teilungsfehler oder als Lagefehler des Seilpakets bezeichnet werden kann.

Problematisch ist nun, dass die zuvor beschriebenen Verbindungselemente bzw. deren Aufnahmeräume für ideal angeordnete Zugträger bzw. Klemmkörper ausgebildet sind, d.h. die Aufnahmeräume bzw. deren Durchführungen sind in der Querrichtung derart dimensioniert und zueinander beabstandet, wie es dem Durchmesser der Zugträger sowie deren Teilung bei idealer Anordnung entspricht.

Werden nun die Zugträgerenden an einem Ende des Riemens bzw. Gurtes vom Material des Grundkörpers freigelegt und jeweils mit einem Klemmkörper wie zuvor beschrieben verpresst, so weisen die freigelegten Enden der Zugträger üblicherweise tatsächlich eine ungleichmäßige Teilung auf, welche der Einwirkungen des Herstellungsprozesses wie zuvor beschrieben geschuldet ist. Werden die Zugträgerenden mit ihrem Klemmkörper, welche ebenfalls die ungleichmäßige Teilung der Zugträgerenden abbilden, nun in die Durchführung und den Aufnahmeraum des jeweiligen Verbindungselements eingelegt, welche der idealen Teilung der Zugträger entsprechen, so werden die Zugträger in diesem Bereich in der Querrichtung gebogen und somit die Zugkräfte eher schräg als geradlinig in der Längsrichtung übertragen.

Dies kann zu ungleichmäßigen Kraftübertragungen und Belastungen der einzelnen Zugträger bzw. deren verpresster Verbindungen zum jeweiligen Klemmkörper führen. Hierdurch kann es zu Rissen bzw. zu Brüchen der Zugträger bzw. deren verpresster Klemmkörper kommen.

Auch kann dies Querkräfte auf den Riemen bzw. Gurt hervorrufen, welche zu einem Schräglauf des Riemens bzw. Gurtes im Betrieb führen können. Dies kann grundsätzlich die Abnutzung erhöhen und insbesondere zu seitlichen Kontakt mit feststehenden Elementen der Riemen- bzw. Gurtanlage führen, welche Beschädigungen oder zumindest eine besonders hohe Abnutzung der Seitenkanten des Riemens bzw. Gurtes hervorrufen können.

Eine Aufgabe der vorliegenden Erfindung ist es, einen Gurt oder ein Gurtsegment der eingangs beschriebenen Art bereit zu stellen, so dass die negativen Einflüsse von Teilungsfehlern der Zugträger vermieden oder zumindest reduziert werden können. Dies soll möglichst einfach und bzw. oder flexibel erfolgen können. Zumindest soll eine Alternative zu bekannten derartigen Gurten oder Gurtsegmenten zur Verfügung gestellt werden.

Die Aufgabe wird erfindungsgemäß durch einen Gurt oder ein Gurtsegment mit den Merkmalen der unabhängigen Patentansprüche gelöst. Vorteilhafte Weiterbildungen sind in den Unteransprüchen beschrieben.

Somit betrifft die Erfindung einen Gurt oder ein Gurtsegment mit einer Mehrzahl von in Längsrichtung verlaufenden und parallel zueinander angeordneten Zugträgern, wobei die Enden der Zugträger jeweils mit einem Klemmkörper kraftschlüssig verbunden sind, und mit einem Verbindungselement, welches ein Gurtende bzw. ein Gurtsegmentende bildet und zur Verbindung mit einem weiteren Verbindungselement des anderen Gurtendes bzw. eines Gurtsegmentendes eines weiteren Gurtsegments ausgebildet ist, wobei die Klemmkörper der Enden der Zugträger jeweils von einem Aufnahmeraum des Verbindungselement senkrecht zur Längsrichtung aufgenommen und wenigstens in Längsrichtung formschlüssig gehalten werden. Die Zugträger können vorzugsweise Stahlseile sein, welche hohe Zugkräfte übertragen können.

Der erfindungsgemäße Gurt bzw. das erfindungsgemäße Gurtsegment ist dadurch gekennzeichnet, dass die Aufnahmeräume des Verbindungselement in der Querrichtung entsprechend einer vorbestimmten Teilung der Zugträger zueinander angeordnet sind und dass die Gesamtheit der Aufnahmeräume des Verbindungselement in der Querrichtung versetzt zur Symmetrieachse des Verbindungselement angeordnet ist.

Unter Längsrichtung ist die Richtung zu verstehen, in der der Gurt bzw. das Gurtsegment endlos geschlossen ist bzw. geschlossen werden kann. Hierzu senkrecht erstreckt sich die Querrichtung, welche auch als Breite bezeichnet werden kann, sowie die Höhe bzw. Dicke des Gurtes bzw. Gurtsegments. Ein Gurt kann durch die Verbindung seiner beiden Enden endlos geschlossen werden oder mehrere Gurtsegmente können über die Verbindung ihrer Enden zu einem Gurt endlos geschlossen werden.

Die Enden der Zugträger können von dem Verbindungselement gehalten werden. Das Verbindungselement ist vorzugsweise scharnierartig ausgebildet, so dass es mit einem entsprechenden zweiten Verbindungselement des anderen Endes des Gurtes bzw. eines Endes eines weiteren Gurtsegments ein drehbares Gelenk ausbilden kann. Hierdurch kann ermöglicht werden, dass sich dieser Kopplungsbereich einer Umlenkung des geschlossenen Gurtes um z.B. eine Trommel besser anpassen kann.

Vorzugsweise wird diese Kopplung zwischen den Verbindungselementen durch einen Kopplungsstab realisiert, der in Querrichtung durch Bohrungen der zinnenartigen Vorsprünge der Verbindungselemente hindurchgeführt und gesichert ist. Hierdurch kann diese Verbindung auch lösbar ausgebildet sein.

In jedem Fall wird eine geklemmte Verbindung der Enden der Zugträger in dem jeweiligen Klemmkörper vorgesehen, welcher einen separaten Körper gegenüber dem Verbindungselement darstellt. Die geklemmte Verbindung zwischen den Enden der Zugträger mit dem jeweiligen Klemmkörper kann vorzugsweise durch Verpressen erfolgen. Der Klemmkörper seinerseits kann dann vom Verbindungselement derart aufgenommen werden, dass eine formschlüssige Verbindung in Längsrichtung hergestellt werden kann.

Die Enden der Zugträger jeweils einzeln mit einem Klemmkörper kraftschlüssig zu verbinden kann dahingehend vorteilhaft sein, hierdurch kleinere Klemmkörper verwenden zu können, was die Variantenvielfalt reduzieren kann.

Vorzugweise sind alle Enden der Zugträger jeweils mit einem einzelnen Klemmkörper verbunden. Hierdurch können die entsprechenden Vorteile auf jeden Zugträger angewendet werden.

Hierzu kann auch jeweils ein einheitlicher Klemmkörpertyp wiederholend verwendet werden, auch für Gurte bzw. Gurtsegmente mit einer unterschiedlichen Anzahl von Zugträgern, was die Herstellungskosten reduzieren kann. Mit anderen Worten kann darauf verzichtet werden, unterschiedliche Klemmkörper für unterschiedliche Gurte bzw. Gurtsegmente herstellen und bereitstellen zu müssen.

Durch die Aufnahmeräume, welche auch als Klemmkörperaufnahmen bezeichnet werden können, kann innerhalb der Abmaße des Verbindungselements ein Platz, ein Raum bzw. ein Volumen geschaffen werden, wo die Klemmkörper jeweils vom Verbindungselement aufgenommen werden können, um formschlüssig Halt zu finden. Hierbei einen Aufnahmeraum pro Klemmkörper vorzusehen kann jeweils einen Platz zur Aufnahme eines derartigen Klemmkörpers durch das Verbindungselement schaffen, d.h. für sehr kleine Klemmkörper, die jeweils nur ein einzelnes Ende eines Zugträgers in sich aufnehmen können.

Vorzugsweise weist das Verbindungselement wenigstens zwei Aufnahmeräume auf, in denen jeweils wenigstens, vorzugsweise genau, ein mit einem Klemmkörper versehenes Ende eines Zugträgers aufgenommen und wenigstens in Längsrichtung formschlüssig gehalten werden kann, wobei die beiden Klemmkörperaufnahmen in Querrichtung durch einen in Längsrichtung verlaufenden Steg voneinander getrennt sind. Auf diese Weise kann die Übertragung von Zugkräften in Längsrichtung verbessert werden, weil diese nicht nur über die seitlichen Kanten des Verbindungselements, sondern auch durch die Stege zwischen den Aufnahmeräumen direkt übertragen werden können. Hierdurch kann die Verformung des Verbindungselements reduziert werden.

Aufgrund der Ausbildung der Klemmkörperaufnahme, einen Klemmkörper aufzunehmen, mit dem die Enden mehrerer Zugträger kraftschlüssig verbunden sind, kann ein Platz zur Aufnahme eines derartigen Klemmkörpers durch das Verbindungselement geschaffen werden, welche aufgrund ihrer Größe einfacher und schneller herzustellen sein kann als mehrere kleinere Klemmkörperaufnahmen.

In jedem Fall können mehrere und insbesondere alle Aufnahmeräume des Verbindungselementes, welche zusammen als Gesamtheit der Aufnahmeräume des Verbindungselement bezeichnet werden können, in der Querrichtung versetzt zur Symmetrieachse des Verbindungselement angeordnet sein. Mit anderen Worten werden erfindungsgemäß die Aufnahmeräume derart im Verbindungselement angeordnet, dass sie vom Idealfall des Verlaufs der Zugträger in der Längsrichtung abweichen. Würden somit ideal im Gurt oder Gurtsegment angeordnete Zugträger bzw. deren mit Klemmkörpern versehene Enden in den unsymmetrisch im Verbindungselement angeordneten Aufnahmeräumen aufgenommen werden, würde dies zu den eingangs beschriebenen Problemen führen.

Dabei liegt der vorliegenden Erfindung die Erkenntnis zugrunde, dass tatsächlich die Zugträger eigentlich nie ideal im Gurt oder Gurtsegment verlaufen, was in Kombination mit Verbindungselementen der eingangs beschriebenen Art, welche auf den idealen Verlauf der Zugträger im Gurt oder Gurtsegment ausgelegt sind, eben zu den eingangs beschriebenen Problemen führen kann.

Erfindungsgemäß wird daher ein Verbindungselement vorgeschlagen, welches dieser Erkenntnis aus der Praxis dadurch Rechnung trägt, dass eben auch die Aufnahmeräume für die Klemmkörper der Enden der Zugträger in der Querrichtung versetzt zur Symmetrieachse des Verbindungselement ausgebildet bzw. angeordnet werden, so dass dann die Kombination von hinsichtlich ihrer Ausrichtung in der Querrichtung zueinander passenden Zugträgern des Gurtes bzw. des Gurtsegments mit dem entsprechenden Verbindungselement eine Kombination geschaffen werden kann, wo die unsymmetrisch verlaufenden Zugträger zur unsymmetrischen Anordnung der Aufnahmeräume passen. Hierdurch kann diese Asymmetrie der Zugträger bzw. deren mit Klemmkörpern versehener Enden durch die entsprechende Anordnung der Aufnahmeräume des Verbindungselements wieder ausgeglichen werden, so dass Zugträger bzw. Klemmkörper und Aufnahmeräume zwar jeweils versetzt zur Symmetrieachse des Verbindungselement jedoch zueinander vergleichsweise ideal angeordnet sind. Hierdurch können die entsprechenden Nachteile vermieden werden.

Hierzu können insbesondere mehrere verschiedene Verbindungselemente hergestellt werden, welche sich in der nicht-idealen Anordnung der Aufnahmeräume untereinander unterschieden. Die Aufnahmeräume können hierzu einheitlich, d.h. in ihrer Gesamtheit, unterschiedlich zu der einen oder anderen Richtung in Querrichtung versetzt angeordnet sein. Alternativ können die Aufnahmeräume auch untereinander unterschiedlich versetzt sein, wodurch sich auch unterschiedliche Teilungen zwischen unmittelbar benachbart angeordneten Aufnahmeräumen ergeben können. In jedem Fall auf diese Art und Weise in Anbetracht des realen nicht-idealen Verlaufs der Zugträger bzw. deren Klemmkörper am Gurtende bzw. am Gurtsegmentende ein Verbindungselement aus der Vielzahl unterschiedlicher Verbindungselemente ausgewählt werden, welche am besten mit den Zugträger bzw. deren Klemmkörper zusammenpasst, d.h. deren Klemmkörper in seinen Aufnahmeräumen so aufnehmen kann, dass die eingangs beschriebenen Nachteile bestmöglich vermieden bzw. ausgeglichen werden können.

Vorzugsweise weist das Verbindungselement an seiner gurtinneren Seite eine halbkreisförmige Einbuchtung auf. Diese Einbuchtung ist halbschalenförmig ausgebildet und entspricht in ihrem Radius dem Radius z.B. einer Trommel, auf dem der Gurt bzw. dessen Kopplungsbereich umgelenkt werden kann. Diese Einbuchtung erleichtert das Abrollen auf der Trommel und kann ein Einknicken der Zugträger vermeiden helfen, so dass die Zugträger auch beim Abrollen stets in der neutralen Phase bleiben können. Hierdurch kann ein Einknicken der Zugträger vermieden und deren Lebensdauer bzw. die Lebensdauer des Gurtes erhöht werden.

Gemäß einem Aspekt der Erfindung sind alle Aufnahmeräume des Verbindungselements in der Querrichtung entsprechend der vorbestimmten gleichen Teilung der Zugträger zueinander angeordnet sind. Dies kann eine konkrete Möglichkeit der Umsetzung darstellen, wie zuvor beschrieben.

Gemäß einem weiteren Aspekt der Erfindung weist das Verbindungselement pro Aufnahmeraum eine Zugträgerdurchführung, vorzugsweise als Nut, auf, welche jeweils ausgebildet ist, einen Zugträger in Längsrichtung in den jeweiligen Aufnahmeraum zu führen, wobei die Gesamtheit der Zugträgerdurchführungen des Verbindungselement in der Querrichtung versetzt zur Symmetrieachse des Verbindungselement angeordnet ist. Hierdurch kann eine Verbindung bzw. eine Öffnung, einseitig offen oder umschlossen, geschaffen werden, um das Ende eines Zugträgers unmittelbar vor dem Klemmkörper durch das Verbindungselement bzw. dessen Körper zu führen. Der Bereich des Verbindungselements, durch den ein Zugträger durch die Zugträgerdurchführung hindurch in die Klemmkörperaufnahme austreten kann, bildet den Anschlag des Klemmkörpers für den formschlüssigen Halt des Verbindungselements.

Vorzugsweise ist die Zugträgerdurchführung als Bohrung durch das Verbindungselement ausgebildet. Auf diese Weise kann die Zugträgerdurchführung ringsherum vom Material des Verbindungselements umgeben sein, so dass die Kräfte des Formschlusses gleichmäßig übertragen werden können. Hierdurch kann eine größere Stabilität erzeugt werden. Dabei ist es erforderlich, dass die Enden der Zugträger durch die Bohrungen hindurch in die Klemmkörperaufnahme gesteckt werden, wo sie in entsprechende Aufnahmen des Klemmkörpers eingeführt und dann dort verpresst werden können.

Alternativ und vorzugsweise ist die Zugträgerdurchführung als Nut durch das Verbindungselement ausgebildet. Mit anderen Worten ist das Material des Verbindungselements in der Höhe unterbrochen, so dass die mit dem Klemmkörper versehenen Enden der Zugträger von einer Seite in die Nuten eingelegt werden können. Hierbei wird gleichzeitig der Klemmkörper in die Klemmkörperaufnahme eingelegt. Auf diese Weise kann das Verpressen unabhängig vom Verbindungselement vor diesem Schritt erfolgen.

Vorzugweise weist der Gurt oder das Gurtsegment ferner eine Abdeckung auf, welche die Nut und bzw. oder die Klemmkörperaufnahme senkrecht zur Längsrichtung verschließen kann. Auf diese Weise können die in die Nuten eingeführten Zugträger bzw. der in der Klemmkörperaufnahme aufgenommene Klemmkörper dort durch die Abdeckung geschützt werden. Weiterhin können durch die Abdeckung die Reibungswerte des Gelenkes an die Oberfläche des Gurtes und die optische Erscheinung des Gurtes beeinflusst werden.

Vorzugsweise ist die Zugträgerdurchführung in Längsrichtung in entgegengesetzter Richtung zu den Enden der Zugträger aufgeweitet ausgebildet. Auf diese Weise kann insbesondere bei einer Biegung des Gurtes z.B. an einer Trommel ein Einknicken der Zugträger vermieden werden. Mit anderen Worten kann erreicht werden, dass die Zugträger immer in der neutralen Phase verlaufen können. Dies vermeidet Beschädigungen der Zugträger und erhöht deren Lebensdauer bzw. die Lebensdauer des Gurtes.

Vorzugsweise ist die Aufweitung der Zugträgerdurchführung kegelförmig ausgebildet. Hierdurch kann der zuvor beschriebenen Vorteile einfach umgesetzt werden. Dies gilt ebenso für eine hyperbolische Form der Aufweitung.

Gemäß einem weiteren Aspekt der Erfindung sind alle Zugträgerdurchführungen des Verbindungselements in der Querrichtung entsprechend der vorbestimmten gleichen Teilung der Zugträger zueinander angeordnet. Dies kann die Variantenvielfalt der erfindungsgemäßen Verbindungselemente geringhalten, da üblicherweise die Zugträger gleich und parallel zueinander relativ zur Symmetrieachse des Verbindungselements verschoben werden und nicht oder nur unwesentlich zueinander.

Die vorliegende Erfindung betrifft auch einen Gurt oder ein Gurtsegment mit einer Mehrzahl von in Längsrichtung verlaufenden und parallel zueinander angeordneten Zugträgern, wobei die Enden der Zugträger mit einem gemeinsamen Klemmkörper kraftschlüssig verbunden sind, und mit einem Verbindungselement, welches ein Gurtende bzw. ein Gurtsegmentende bildet und zur Verbindung mit einem weiteren Verbindungselement des anderen Gurtendes bzw. eines Gurtsegmentendes eines weiteren Gurtsegments ausgebildet ist, wobei der gemeinsame Klemmkörper der Enden der Zugträger von einem Aufnahmeraum des Verbindungselement senkrecht zur Längsrichtung aufgenommen und wenigstens in Längsrichtung formschlüssig gehalten wird.

Der erfindungsgemäße Gurt bzw. das erfindungsgemäße Gurtsegment ist dadurch gekennzeichnet, dass die Enden der Zugträger mit dem gemeinsamen Klemmkörper in der Querrichtung entsprechend einer vorbestimmten Teilung der Zugträger kraftschlüssig verbunden sind und dass der Aufnahmeraum des Verbindungselements in der Querrichtung versetzt zur Symmetrieachse des Verbindungselement angeordnet ist. Hierdurch können die zuvor beschriebenen Eigenschaften und Vorteile mittels eines Verbindungselements und Klemmkörpers umgesetzt werden, bei dem mehrere Enden von Zugträgern gemeinsam vom Klemmkörper aufgenommen werden können. Dies kann die Umsetzung der Erfindung auch in diesem Fall ermöglichen. Dies kann vorteilhaft sein, da ein größerer Klemmkörper einfacher herzustellen, zu handhaben und zu montieren sein kann, was die Herstellung- und Montagekosten reduzieren kann.

Vorzugweise sind alle Enden der Zugträger in einem gemeinsamen Klemmkörper eingeklemmt. Dies hat den Vorteil, dass die eingeklemmten Zugträger gemeinsam einfacher zu handhaben sind.

Gemäß einem Aspekt der Erfindung sind alle Enden der Zugträger in der Querrichtung entsprechend der vorbestimmten gleichen Teilung der Zugträger zueinander angeordnet. Hierdurch können die zuvor beschriebenen entsprechenden Eigenschaften und Vorteile auch bei einem Verbindungselement und Klemmkörper umgesetzt werden, bei dem mehrere Enden von Zugträgern gemeinsam vom Klemmkörper aufgenommen werden können.

Gemäß einem weiteren Aspekt der Erfindung sind alle Zugträgerdurchführungen des Verbindungselement in der Querrichtung entsprechend der vorbestimmten gleichen Teilung der Zugträger zueinander angeordnet. Hierdurch können die zuvor beschriebenen entsprechenden Eigenschaften und Vorteile auch bei einem Verbindungselement und Klemmkörper umgesetzt werden, bei dem mehrere Enden von Zugträgern gemeinsam vom Klemmkörper aufgenommen werden können.

Gemäß einem weiteren Aspekt der Erfindung ist das Material des Klemmkörpers weicher als das Material des Verbindungselements. Unter "weich" ist hierbei eine bessere Fließfähigkeit oder plastische Verformbarkeit des Materials des Klemmkörpers in Relation zum Material des Verbindungselements zu verstehen. Beispielsweise kann als Material des Klemmkörpers z.B. ein rostfreier Edelstahl wie z.B. V4A verwendet werden. Als Material des Verbindungselements kann z.B. ein harter oder härtbarer Stahl eingesetzt werden. Das vergleichsweise weiche Material des Klemmkörpers begünstigt ein gutes Verpressen mit den Enden des Zugträgers wie z.B. Stahlseile. Dies kann die Klemmwirkung bei gleicher Presskraft erhöhen bzw. die erforderliche Presskraft zur Herstellung der kraftschlüssigen Verbindung reduzieren. Das Material des Verbindungselements kann durch seine vergleichsweise hohe Härte hohe Belastungen aufnehmen und hierdurch einem Verzug entgegenwirken. Ebenso kann hierdurch grundsätzlich der Verschleiß durch Abrieb reduziert werden.

Vorteilhaft ist dabei auch, dass das Verbindungselement durch ein Guß- oder Schmiedeteil hergestellt werden kann, was die Herstellungskosten reduzieren kann. Der Klemmkörper kann gleichzeitig durch einen kleinen und geometrisch einfachen Körper realisiert werden, was ebenfalls die Herstellungskosten reduzieren kann.

Gemäß einem weiteren Aspekt der Erfindung weist der Gurt bzw. das Gurtsegment einen elastomeren Grundkörper auf, in dem die Zugträger eingebettet sind, wobei die Enden der Zugträger von dem Material des elastomeren Grundkörpers freigelegt sind. Das Material des elastomeren Grundkörpers ist vorzugsweise ein vulkanisiertes Gummi. Auf diese Weise kann ein elastischer Gurt bzw. ein elastisches Gurtsegment geschaffen werden. Hierbei ist unter dem Freilegen der Enden der Zugträger ein äußeres Freilegen von dem elastomeren Material des Grundkörpers zu verstehen, so dass die Enden der Zugträger wie z.B. Stahlseile nach außen blank erscheinen und aufgrund ihres geringen Querschnitts in die Klemmkörperaufnahmen des Klemmkörpers eingeführt und dort verpresst werden können.

Mehrere Ausführungsbeispiele und weitere Vorteile der Erfindung werden nachstehend im Zusammenhang mit den folgenden Figuren erläutert. Darin zeigt:
- Fig. 1: eine schematische Draufsicht auf einen Gurt mit zwei miteinander gekoppelten bekannten Verbindungselementen;
- Fig. 2: eine schematische Draufsicht auf einen Gurt mit einem bekannten Verbindungselement (oben) und mit einem erfindungsgemäßen Verbindungselement eines ersten Ausführungsbeispiels (unten), welche miteinander gekoppelt sind;
- Fig. 3: eine schematische Draufsicht auf einen Gurt mit einem bekannten Verbindungselement (oben) und mit einem erfindungsgemäßen Verbindungselement eines zweiten Ausführungsbeispiels (unten), welche miteinander gekoppelt sind;
- Fig. 4: eine schematische Draufsicht auf einen Gurt mit einem erfindungsgemäßen Verbindungselement des zweiten Ausführungsbeispiels (oben) und mit einem erfindungsgemäßen Verbindungselement des ersten Ausführungsbeispiels, welche miteinander gekoppelt sind; und
- Fig. 5: eine schematische Draufsicht auf einen Gurt mit einem erfindungsgemäßen Verbindungselement des ersten Ausführungsbeispiels (oben) und mit einem erfindungsgemäßen Verbindungselement des ersten Ausführungsbeispiels, welche miteinander gekoppelt sind.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung (nicht dargestellt). Die Längsrichtung X kann auch als Tiefe X, die Querrichtung Y auch als Breite Y und die vertikale Richtung auch als Höhe bezeichnet werden. Die Längsrichtung X und die Querrichtung Y bilden gemeinsam die Horizontale, X, Y, welche auch als horizontale Ebene X, Y bezeichnet werden kann.

Der Gurt 1 weist einen elastomeren Gurtkörper 10 auf, in welchen in der Längsrichtung X parallel zueinander verlaufende Zugträger 11 in Form von Stahlseilen 11 eingebettet sind. Der Gurt 1 weist zwei Gurtenden 13 auf, an welchen jeweils die Enden 12 der Zugträger 11 vom Material des Grundkörpers 10 freigelegt sind. Der Gurt 1 ist mittels eines Paares von Verbindungselementen 2 in der Längsrichtung X endlos geschlossen. Dies gilt vergleichbar für den Fall, dass stattdessen zwei Gurtsegmente 1 über ihre Gurtsegmentenden 13 miteinander verbunden werden.

Pro Zugträger 11 ist jeweils ein Klemmkörper 28 vorgesehen, innerhalb dessen in der Längsrichtung X verlaufender Durchgangsöffnung bzw. Durchgangsbohrung (nicht dargestellt) ein Ende 12 eines Zugträgers 11 durch Verpressen geklemmt ist. Die Zugträger 11 sind hierzu an ihren Enden 12 von dem Material des elastomeren Grundkörpers 10 des Gurtes 1 freigelegt. Die freigelegten Enden 12 der Stahlseile 11 mit den Klemmkörpern 28 sowie dem jeweiligen Verbindungselement 2 bilden gemeinsam das Gurtende 13.

Das Material der Klemmkörper 28 ist hierzu entsprechend plastisch gut verformbar ausgebildet, so dass es gut verpresst und eine sichere und haltbare kraftschlüssige Verbindung zwischen dem jeweiligen Klemmkörper 28 und dem jeweiligen Enden 12 des Zugträgers 11 hergestellt werden kann. Gleichzeitig ist das Material des Klemmkörpers 28 hart genug ausgebildet, um diese kraftschlüssige Verbindung sicher beibehalten zu können. Hierzu kann ein weicher Stahl wie z.B. V4A verwendet werden. Das Verpressen der Enden 12 der Zugträger 11 in dem Klemmkörper 28 kann hierbei unabhängig von dem Verbindungselement 2 erfolgen.

Jedes Verbindungselement 2 weist einen Grundkörper 20 auf, welcher aus einem harten oder härtbaren Stahl besteht. Der Grundkörper 20 weist an seiner einen Kante in Längsrichtung X mehrere zinnenartige Vorsprünge 21 auf, welche jeweils in Querrichtung Y verlaufende Querbohrungen 22 aufweisen. Die beiden Verbindungselemente 2 zweier Gurtenden 13 desselben Gurts 1 oder zweier Gurtsegmentenden 13 zweier Gurtsegmente 1 sind mittels eines Kopplungsstabs 23 durch ihre Querbohrungen (nicht dargestellt) miteinander gelenksartig verbunden. Der Kupplungsstab 23 wird in dieser Position in Querrichtung Y beidseitig durch Kopplungsstabsicherungen (nicht dargestellt) gesichert.

Der Grundkörper 20 weist eine gurtäußere Seite (nicht bezeichnet) auf, welche die Oberseite des Grundkörpers 20 bildet. Der Grundkörper 20 weist ferner eine gurtinnere Seite (nicht dargestellt) auf, welche die Unterseite des Grundkörpers 20 bildet. Die Unterseite des Gurtkörpers 20 weist eine Einbuchtung auf, welche halbkreisförmig ausgebildet ist und in ihrem Radius dem äußeren Radius z.B. einer Trommel entspricht, um die der Gurt 1 umlaufend kann.

Jedes Verbindungselement 2 weist ferner eine Mehrzahl von Aufnahmeräumen 24 auf, welche auch als Klemmkörperaufnahmen 24 bezeichnet werden können und jeweils als rechteckige Aussparung innerhalb des Grundkörpers 20 ausgebildet sind). Die Aufnahmeräume 24 sind wenigstens zur Oberseite hin, ggfs. zusätzlich auch zur Unterseite hin, offen ausgebildet. Von den Aufnahmeräumen 24 erstrecket sich jeweils eine Zugträgerdurchführung 25 in Längsrichtung X in entgegengesetzter Richtung zu den zinnenartigen Vorsprüngen 21 durch den Grundkörper 20 hindurch. Die Zugträgerdurchführungen 25 sind in Form von Nuten 25 ausgeführt. Die Bereiche des Grundkörpers 20, welche in der Querrichtung Y zwischen den Zugträgerdurchführungen 25 liegen, können als Stege 27 des Grundkörpers 2 bezeichnet werden. Die Zugträgerdurchführungen 25 weisen jeweils dem elastomeren Grundkörper 10 zugewandt eine Aufweitung 26 auf.

Die Enden 12 der Zugträger 11 mit dem jeweiligen verpressten Klemmkörper 28 werden in die Aufnahmeräume 24 des Verbindungselements 2 eingelegt. Hierbei wird jeweils ein Klemmkörper 28 von einem Aufnahmeraum 24 aufgenommen. Die Zugträger 11 werden hierzu von oben in die Nuten 25 eingelegt. Die Klemmkörper 28 werden jeweils in der Längsrichtung X formschlüssig an der Kante des jeweiligen Aufnahmeraums 24, welche den Nuten 25 zugewandt ist, gehalten. Auf diese Weise können die in Längsrichtung X wirkenden Zugkräfte des Gurtes 1 bzw. des Gurtsegments 1 über die Klemmkörper 28 auf die Verbindungselemente 2 übertragen werden. Die Verbindungselemente 2 sind hierzu aus einem zugfesten Material wie z.B. einem gehärteten Stahl ausgebildet. Zwei direkt benachbarte Aufnahmeräume 24, Zugträger 11 bzw. Klemmkörper 28 weisen dabei in der Querrichtung Y einen Abstand zueinander auf, welcher auch als Teilung T bezeichnet werden kann. Die Teilung T aller direkt benachbarter Aufnahmeräume 24, Zugträger 11 bzw. Klemmkörper 28 ist gleich.

Um die Klemmkörper 28 sowie die eingelegten Zugträger 11 in den Aufnahmeräumen 24 des jeweiligen Verbindungselements 2 halten sowie vor äußeren Einflüssen besser schützen zu können, sind diese von oben mit Abdeckungen (nicht dargestellt) versehen. Diese Abdeckungen können z.B. durch einen Rastmechanismus an den seitlichen Kanten in Querrichtung Y der Verbindungselemente 2 befestigt sein.

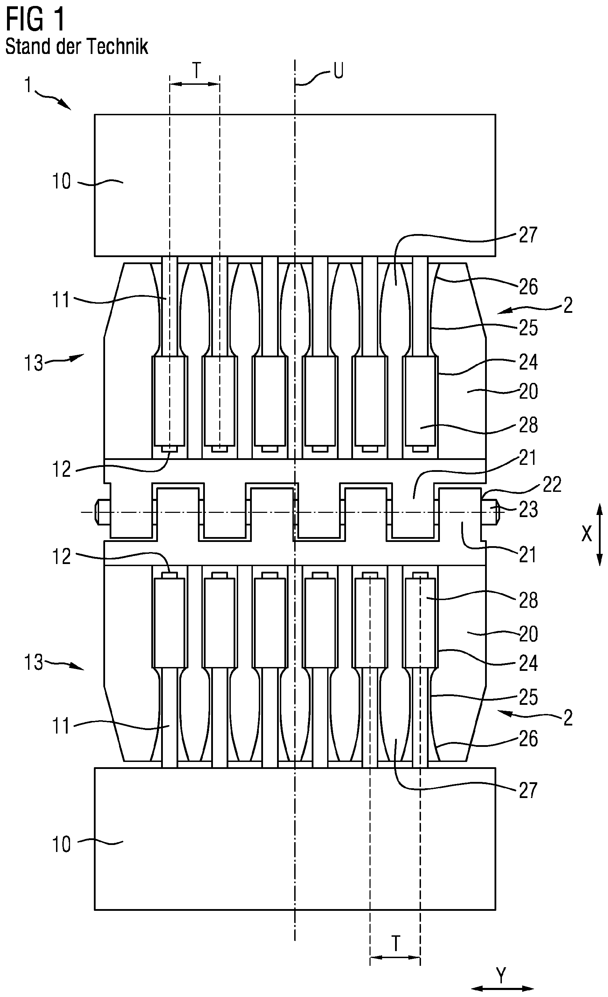

Bekannt ist es dabei, wie in der Figur 1 dargestellt, die Aufnahmeräume 24 der Verbindungselemente 2 symmetrisch zur Mittelachse U der Verbindungselemente 2 als Symmetrieachse U der Verbindungselemente 2 anzuordnen. Hierbei wird davon ausgegangen, dass die Zugträger 28 symmetrisch zur deckungsgleichen Mittelachse bzw. Symmetrieachse (nicht dargestellt) der Gurte 1 bzw. der Gurtsegmente 1 verlaufen. Dies ist jedoch aufgrund der Kräfte bzw. Drücke, welche bei der Vulkanisation des elastomeren Grundkörpers 10 auf diese ausgeübt werden, beim fertigen Produkt nicht der Fall, so dass es durch Versatz zu hinsichtlich der Symmetrieachse U versetzt bzw. unsymmetrisch Anordnungen der Enden 12 der Zugträger 11 samt Klemmkörper 13 in der Querrichtung Y gegenüber den Aufnahmeräumen 24 der Verbindungselemente 2 kommt. Dies kann zu Belastungen der Verbindungselemente 2 sowie zu Bewegungen des Gurtes 1 in der Querrichtung Y führen.

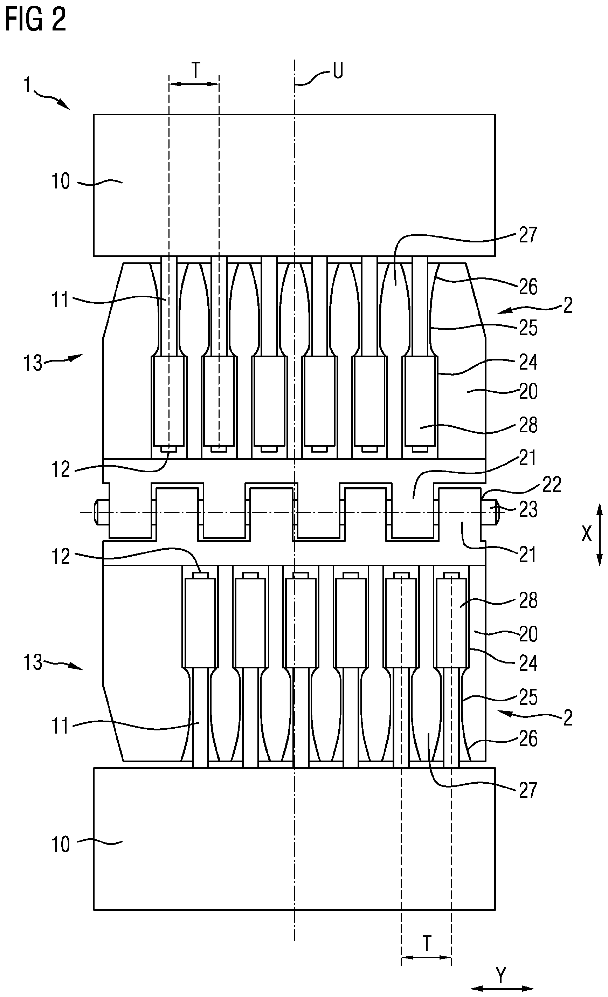

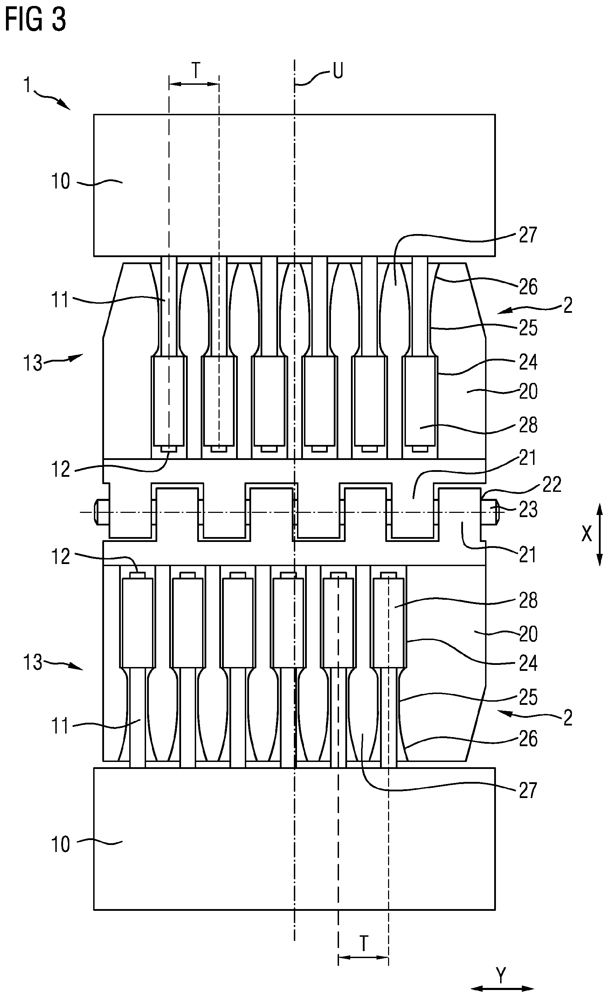

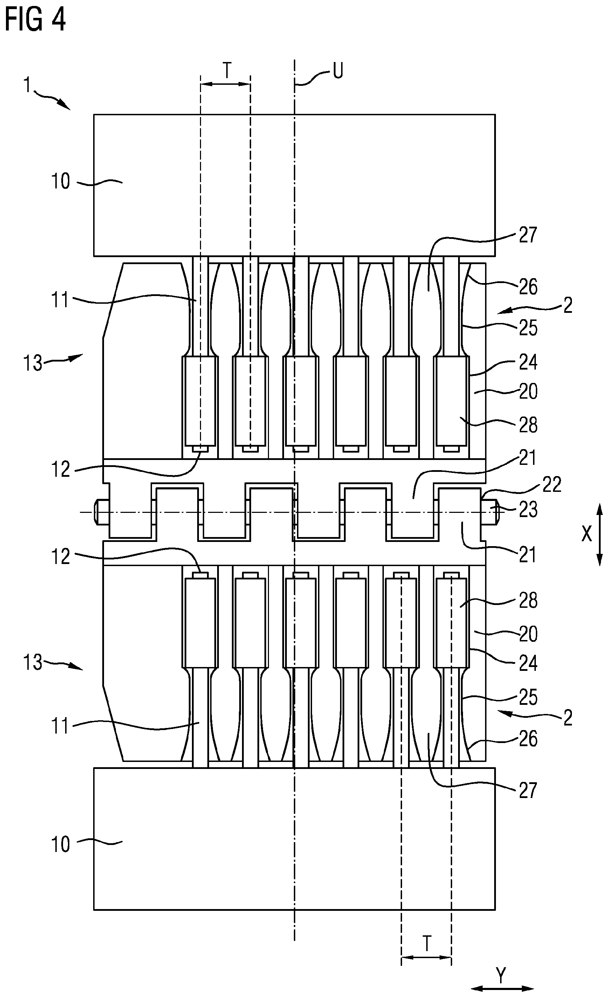

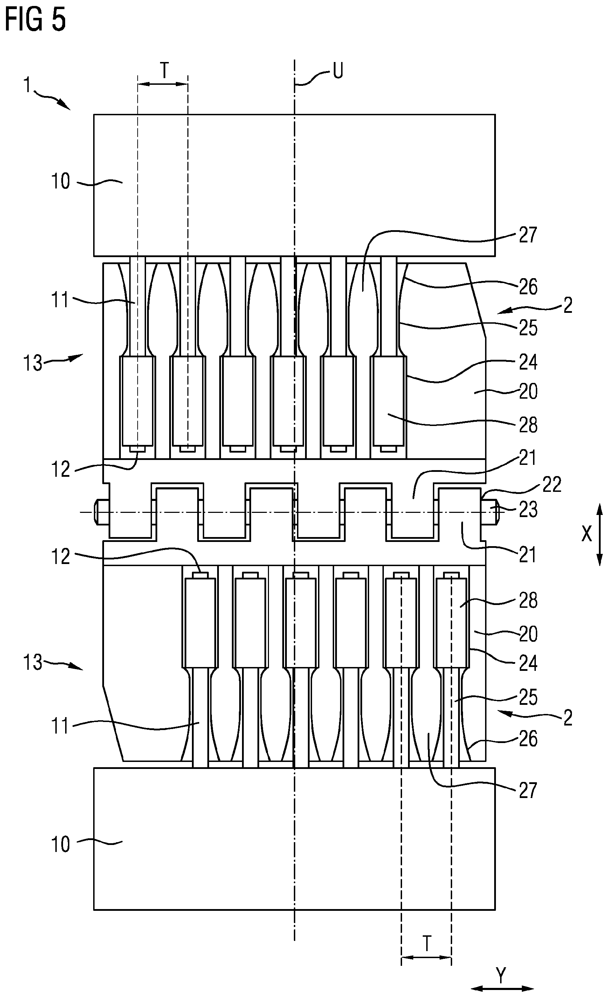

Erfindungsgemäß werden daher Verbindungselemente 2 vorgesehen, dessen Aufnahmeräume 24 in der Querrichtung Y versetzt zur Symmetrieachse U des Verbindungselement 2 ausgebildet bzw. angeordnet sind. Entsprechend kann je nach tatsächlicher Lage auf einer Seite des Kopplungsstabes 23 oder auch auf beiden Seiten des Kopplungsstabes 23 eines von mehreren erfindungsgemäßen Verbindungselementen 2 wie in der Figuren 2 bis 5 dargestellt verwendet werden, welche jeweils eine unsymmetrische Anordnung der Aufnahmeräume 24 in der Querrichtung Y, bei jedoch jeweils gleicher Teilung T, aufweisen.

Entsprechend kann zur Herstellung der Verbindung zwischen den beiden Gurtenden 13 bzw. Gurtsegmentenden 13 eines der erfindungsgemäßen Verbindungselemente 2 ausgewählt werden, so dass die unsymmetrisch verlaufenden Zugträger 11 zur unsymmetrischen Anordnung der Aufnahmeräume 24 passen. Hierdurch kann diese Asymmetrie der Zugträger 11 bzw. deren mit Klemmkörpern 28 versehener Enden 12 durch die entsprechende Anordnung der Aufnahmeräume 24 des Verbindungselements 2 wieder ausgeglichen werden, so dass Zugträger 11 bzw. Klemmkörper 28 und Aufnahmeräume 24 zwar jeweils versetzt zur Symmetrieachse U des Verbindungselement 2 jedoch zueinander vergleichsweise ideal angeordnet sind. Hierdurch können die entsprechenden Nachteile vermieden werden.

### Bezugszeichenliste (Teil der Beschreibung)

- T: Teilung zweier direkt benachbarter Aufnahmeräume 24, Zugträger 11 bzw. Klemmkörper 28
- U: Mittelachse bzw. Symmetrieachse der Verbindungselemente 2 in Querrichtung Y

- X: Längsrichtung; Tiefe
- Y: Querrichtung; Breite
- X, Y: Horizontalen; horizontale Ebene

- 1: Gurt bzw. Gurtsegment
- 10: elastomerer Grundkörper
- 11: Zugträger; Stahlseile
- 12: Ende der Zugträger 11
- 13: Gurtende bzw. Gurtsegmentende

- 2: Verbindungselemente
- 20: Grundkörper
- 21: zinnenartige Vorsprünge
- 22: Querbohrungen der zinnenartigen Vorsprünge 21
- 23: Kopplungsstab
- 24: Aufnahmeräume; Klemmkörperaufnahmen
- 25: Zugträgerdurchführungen des Grundkörpers 20; Nuten des Grundkörpers 20
- 26: Aufweitungen der Zugträgerdurchführungen 25
- 27: Stege des Grundkörpers 20 in Längsrichtung X
- 28: Klemmkörper

## Patentansprüche

1. Gurt (1) oder Gurtsegment (1)
mit einer Mehrzahl von in Längsrichtung (X) verlaufenden und parallel zueinander angeordneten Zugträgern (11),
wobei die Enden (12) der Zugträger (11) jeweils mit einem Klemmkörper (28) kraftschlüssig verbunden sind, und
mit einem Verbindungselement (2), welches ein Gurtende (13) bzw. ein Gurtsegmentende (13) bildet und zur Verbindung mit einem weiteren Verbindungselement (2) des anderen Gurtendes (13) bzw. eines Gurtsegmentendes (13) eines weiteren Gurtsegments (1) ausgebildet ist, wobei die Klemmkörper (28) der Enden (12) der Zugträger (11) jeweils von einem Aufnahmeraum (24) des Verbindungselement (2) senkrecht zur Längsrichtung (X) aufgenommen und wenigstens in Längsrichtung (X) formschlüssig gehalten werden,
wobei die Aufnahmeräume (24) des Verbindungselement (2) in der Querrichtung (Y) entsprechend einer vorbestimmten Teilung der Zugträger (11) zueinander angeordnet sind und
**dadurch gekennzeichnet, dass**
die Gesamtheit der Aufnahmeräume (24) des Verbindungselement (2) in der Querrichtung (Y) versetzt zur Symmetrieachse (U) des Verbindungselement (2) angeordnet ist.

2. Gurt (1) oder Gurtsegment (1) nach Anspruch 1,
wobei alle Aufnahmeräume (24) des Verbindungselements (2) in der Querrichtung (Y) entsprechend der vorbestimmten gleichen Teilung der Zugträger (11) zueinander angeordnet sind.

3. Gurt (1) oder Gurtsegment (1) nach Anspruch 1 oder 2,
wobei das Verbindungselement (2) pro Aufnahmeraum (24) eine Zugträgerdurchführung (25), vorzugsweise als Nut (25), aufweist, welche jeweils ausgebildet ist, einen Zugträger (11) in Längsrichtung (X) in den jeweiligen Aufnahmeraum (24) zu führen,
wobei die Gesamtheit der Zugträgerdurchführungen (25) des Verbindungselement (2) in der Querrichtung (Y) versetzt zur Symmetrieachse (U) des Verbindungselement (2) angeordnet ist.

4. Gurt (1) oder Gurtsegment (1) nach Anspruch 3,
wobei alle Zugträgerdurchführungen (25) des Verbindungselement (2) in der Querrichtung (Y) entsprechend der vorbestimmten gleichen Teilung der Zugträger (11) zueinander angeordnet sind.

5. Gurt (1) oder Gurtsegment (1)
mit einer Mehrzahl von in Längsrichtung (X) verlaufenden und parallel zueinander angeordneten Zugträgern (11),
wobei die Enden (12) der Zugträger (11) mit einem gemeinsamen Klemmkörper (28) kraftschlüssig verbunden sind, und
mit einem Verbindungselement (2), welches ein Gurtende (13) bzw. ein Gurtsegmentende (13) bildet und zur Verbindung mit einem weiteren Verbindungselement (2) des anderen Gurtendes (13) bzw. eines Gurtsegmentendes (13) eines weiteren Gurtsegments (1) ausgebildet ist, wobei der gemeinsame Klemmkörper (28) der Enden (12) der Zugträger (11) von einem Aufnahmeraum (24) des Verbindungselement (2) senkrecht zur Längsrichtung (X) aufgenommen und wenigstens in Längsrichtung (X) formschlüssig gehalten wird,
wobei die Enden (12) der Zugträger (11) mit dem gemeinsamen Klemmkörper (28) in der Querrichtung (Y) entsprechend einer vorbestimmten Teilung der Zugträger (11) kraftschlüssig verbunden sind und
**dadurch gekennzeichnet, dass**
der Aufnahmeraum (24) des Verbindungselements (2) in der Querrichtung (Y) versetzt zur Symmetrieachse (U) des Verbindungselement (2) angeordnet ist.

6. Gurt (1) oder Gurtsegment (1) nach Anspruch 5,
wobei alle Enden (12) der Zugträger (11) in der Querrichtung (Y) entsprechend der vorbestimmten gleichen Teilung der Zugträger (11) zueinander angeordnet sind.

7. Gurt (1) oder Gurtsegment (1) nach Anspruch 5 oder 6,
wobei das Verbindungselement (2) eine Mehrzahl von Zugträgerdurchführungen (25), vorzugsweise als Nut (25), aufweist, welche jeweils ausgebildet sind, einen Zugträger (11) in Längsrichtung (X) in den gemeinsamen Aufnahmeraum (24) zu führen,
wobei die Gesamtheit der Zugträgerdurchführungen (25) des Verbindungselement (2) in der Querrichtung (Y) versetzt zur Symmetrieachse (U) des Verbindungselement (2) angeordnet ist.

8. Gurt (1) oder Gurtsegment (1) nach Anspruch 7,
wobei alle Zugträgerdurchführungen (25) des Verbindungselements (2) in der Querrichtung (Y) entsprechend der vorbestimmten gleichen Teilung der Zugträger (11) zueinander angeordnet sind.

9. Gurt (1) oder Gurtsegment (1) nach einem der vorangehenden Ansprüche,
wobei das Material des Klemmkörpers (28) weicher als das Material des Verbindungselements (2) ist.

10. Gurt (1) oder Gurtsegment (1) nach einem der vorangehenden Ansprüche,
wobei der Gurt (1) bzw. das Gurtsegment (1) einen elastomeren Grundkörper (10) aufweist, in dem die Zugträger (11) eingebettet sind,
wobei die Enden (12) der Zugträger (11) von dem Material des elastomeren Grundkörpers (10) freigelegt sind.

## Claims

1. Belt (1) or belt segment (1)
with a plurality of tension members (11) running longitudinally (X) and arranged parallel to each other, wherein the ends (12) of the tension members (11) are each connected by a clamping body (28), and with a connecting member (2), which forms a belt end (13) or a belt segment end (13) and is designed for connection with a further connecting member (2) of the other belt end (13) or a belt segment end (13) of a further belt segment (1), wherein the clamping bodies (28) of the ends (12) of the tension members (11) are each taken up by a receiving space (24) of the connecting member (2) perpendicular to the longitudinal direction (X) and held in a form-fitting manner at least in the longitudinal direction (X),
**characterized by the fact that**
the receiving spaces (24) of the connecting member (2) are arranged in the transverse direction (Y) according to a predetermined division of the tension members (11) in relation to each other and that the entirety of the receiving spaces (24) of the connecting member (2) is offset in the transverse direction (Y) to the symmetry axis (U) of the connecting member (2) .

2. Belt (1) or belt segment (1) according to claim 1, wherein all receiving spaces (24) of the connecting member (2) are arranged in the transverse direction (Y) according to the predetermined equal pitch of the tension members (11) in relation to each other.

3. Belt (1) or belt segment (1) according to claim 1 or 2,
wherein the connecting member (2) has one tension member bushing (25) per receiving space (24), preferably as a groove (25), which is each designed to guide a tension member (11) in the longitudinal direction (X) into the respective receiving space (24), wherein the entirety of the tension member bushings (25) of the connecting member (2) is arranged in the transverse direction (Y) offset to the symmetry axis (U) of the connecting member (2).

4. Belt (1) or belt segment (1) according to claim 3,
wherein all tension member penetrations (25) of the connecting member (2) are arranged in the transverse direction (Y) according to the predetermined equal division of the tension members (11) in relation to each other.

5. Belt (1) or belt segment (1)
with a plurality of tension members (11) running in the longitudinal direction (X) and arranged parallel to each other, wherein the ends (12) of the tension members (11) are connected in a force-fit manner with a common clamping body (28), and with a connecting element (2), which forms a belt end (13) or a belt segment end (13) and is designed for connection with a further connecting member (2) of the other belt end (13) or a belt segment end (13) of a further belt segment (1), wherein the common clamping body (28) of the ends (12) of the tension members (11) is taken up by a receiving space (24) of the connecting member (2) perpendicular to the longitudinal direction (X) and held in a form-fitting manner at least in the longitudinal direction (X),
**characterized by the fact that**
the ends (12) of the tension members (11) are connected to the common clamping body (28) in the transverse direction (Y) according to a predetermined pitch of the tension members (11) and that
the receiving space (24) of the connecting element (2) is arranged in the transverse direction (Y) offset from the axis of symmetry (U) of the connecting element (2).

6. The belt (1) or belt segment (1) according to claim 5, wherein all ends (12) of the tension members (11) are arranged in the transverse direction (Y) according to the predetermined equal division of the tension members (11) in relation to each other.

7. The belt (1) or belt segment (1) according to claim 5 or 6, wherein the connecting member (2) has a plurality of tension member bushings (25), preferably as groove (25), each of which is designed to guide a tension member (11) in the longitudinal direction (X) into the common receiving space (24), wherein the totality of the tension member bushings (25) of the connecting member (2) is arranged in the transverse direction (Y) offset to the symmetry axis (U) of the connecting member (2).

8. Belt (1) or belt segment (1) according to claim 7,
wherein all tension member penetrations (25) of the connecting member (2) are arranged in the transverse direction (Y) according to the predetermined equal division of the tension members (11) in relation to each other.

9. Belt (1) or belt segment (1) according to one of the preceding claims,
wherein the material of the clamping body (28) is softer than the material of the fastener (2).

10. Belt (1) or belt segment (1) according to any of the preceding claims,
wherein the belt (1) or the belt segment (1) has an elastomeric base body. (10) in which the tension members (11) are embedded, wherein the ends (12) of the tension members (11) are exposed by the material of the elastomeric base body (10).

## Revendications

1. Ceinture (1) ou segment de ceinture (1)
avec une pluralité d'éléments de tension (11) courant longitudinalement (X) et disposés parallèlement les uns aux autres, où les extrémités (12) des éléments de tension (11) sont chacune reliées par un corps de serrage (28), et avec un élément de raccordement (2), qui forme une extrémité de courroie (13) ou une extrémité de segment de courroie (13) et est conçue pour être connectée à un autre élément de raccordement (2) de l'autre extrémité de courroie (13) ou à une extrémité de segment de courroie (13) d'un autre segment de courroie (1), où les corps de serrage (28) des extrémités (12) des éléments de tension (11) sont chacun occupés par un espace récepteur (24) du membre de connexion (2) perpendiculaire à la direction longitudinale (X) et maintenu de manière ajustée au moins dans la direction longitudinale (X),
**caractérisée par le fait que**
les espaces récepteurs (24) de l'élément de connexion (2) sont disposés dans la direction transversale (Y) selon une division prédéterminée des éléments de tension (11) les uns par rapport aux autres, et que l'ensemble des espaces de réception (24) de l'élément de connexion (2) est décalé dans la direction transversale (Y) par rapport à l'axe de symétrie (U) de l'élément de connexion
(2) .

2. Ceinture (1) ou segment de ceinture (1) selon la revendication 1, où tous les espaces de réception (24) de l'élément de connexion (2) sont disposés dans la direction transversale (Y) selon la hauteur égale prédéterminée des éléments de tension (11) l'un par rapport aux autres.

3. Ceinture (1) ou segment de ceinture (1) selon la revendication 1 ou 2,
où l'élément de raccordement (2) possède une bague de l'élément de tension (25) par espace de réception (24), de préférence sous forme de rainure (25), chacune conçue pour guider un élément de tension (11) dans la direction longitudinale (X) dans l'espace de réception correspondant (24), où l'ensemble des bagues de l'élément de tension (25) de l'élément de raccordement (2) est disposé dans la direction transversale (Y) décalée par rapport à l'axe de symétrie (U) de l'élément de connexion (2).

4. Ceinture (1) ou segment de ceinture (1) selon la revendication 3,
où toutes les pénétrations des éléments de tension (25) de l'élément de connexion (2) sont disposées dans la direction transversale (Y) selon la division égale prédéterminée des éléments de tension (11) les uns par rapport aux autres.

5. Ceinture (1) ou segment de ceinture (1)
avec une pluralité d'éléments de tension (11) courant dans la direction longitudinale (X) et disposés parallèlement les uns aux autres, où les extrémités (12) des éléments de tension (11) sont reliées de manière forcée avec un corps de serrage commun (28), et avec un élément de connexion (2), qui forme une extrémité de courroie (13) ou une extrémité de segment de courroie (13) et est conçue pour être connectée à un autre élément de raccordement (2) de l'autre extrémité de courroie (13) ou à une extrémité de segment de courroie (13) d'un autre segment de courroie (1), où le corps de serrage commun (28) des extrémités (12) des éléments de tension (11) est occupé par un espace de réception (24) du membre de connexion (2) perpendiculaire à la direction longitudinale (X) et maintenu de manière ajustée au moins dans la direction longitudinale (X),
**caractérisée par le fait que**
les extrémités (12) des éléments de tension (11) sont reliées au corps de serrage commun (28) dans la direction transversale (Y) selon une hauteur prédéterminée des éléments de tension (11) et que
l'espace de réception (24) de l'élément de connexion (2) est disposé dans la direction transversale (Y) décalée par rapport à l'axe de symétrie (U) de l'élément de connexion (2).

6. La courroie (1) ou segment de courroie (1) selon la revendication 5, où toutes les extrémités (12) des éléments de tension (11) sont disposées dans la direction transversale (Y) selon la division égale prédéterminée des éléments de tension (11) les uns par rapport aux autres.

7. La courroie (1) ou segment de courroie (1) selon la revendication 5 ou 6, où l'élément de raccordement (2) possède une pluralité de bagues de l'élément de tension (25), de préférence en rainure (25), chacune conçue pour guider un élément de tension (11) dans la direction longitudinale (X) vers l'espace de réception commun (24), où la totalité des bagues de l'élément de raccordement (25) de l'élément de raccordement (2) est disposée dans la direction transversale (Y) décalée par rapport à l'axe de symétrie (U) de l'élément de raccordement (2).

8. Ceinture (1) ou segment de ceinture (1) selon la revendication 7,
où toutes les pénétrations des éléments de tension (25) de l'élément de connexion (2) sont disposées dans la direction transversale (Y) selon la division égale prédéterminée des éléments de tension (11) les uns par rapport aux autres.

9. Ceinture (1) ou segment de ceinture (1) selon l'une des revendications précédentes, où le matériau du corps de serrage (28) est plus tendre que celui du fixateur (2).

10. Ceinture (1) ou segment de ceinture (1) selon l'une des revendications précédentes, où la ceinture (1) ou le segment de ceinture (1) possède un corps de base élastomère. (10) dans laquelle les éléments de tension (11) sont encastrés, où les extrémités (12) des éléments de tension (11) sont exposées par le matériau du corps de base élastomérique (10).
